# EUROPÄISCHE PATENTSCHRIFT

(11) **EP 3 401 594 B1**
(45) Veröffentlichungstag und Bekanntmachung des Hinweises auf die Patenterteilung: **08.06.2022**
(21) Anmeldenummer: 18169144.5
(22) Anmeldetag: 25.04.2018
(51) Int. Cl.: F23D 3/40, F04D 29/66, F24H 3/06, F24H 9/00

(54) **FAHRZEUGHEIZGERÄT**
VEHICLE HEATING DEVICE
APPAREIL CHAUFFANT POUR VÉHICULE

(30) Priorität: 10.05.2017 DE 102017110018
(43) Veröffentlichungstag der Anmeldung: 14.11.2018
(73) Patentinhaber: Eberspächer Climate Control Systems GmbH, 73730 Esslingen (DE)
(72) Erfinder: HUMBURG, Michael, 73035 Göppingen (DE); JENSEN, Hans, 73265 Dettingen (DE)
(74) Vertreter: Ruttensperger Lachnit Trossin Gomoll

(56) Entgegenhaltungen:
- EP-A1- 3 252 315
- DE-A1- 2 856 860
- DE-B3-102004 048 481
- DE-B3-102012 213 598
- DE-U1-202004 015 442
- JP-A- 2002 332 988

## Beschreibung

Die vorliegende Erfindung betrifft ein Fahrzeugheizgerät, das zur Erwärmung von in einen Fahrzeuginnenraum einzuleitender Heizluft genutzt werden kann.

Ein derartiges Fahrzeugheizgerät ist aus der DE 20 2004 015 442 U1 bekannt. Bei diesem Fahrzeugheizgerät sind in einem von der Heizluft durchströmbaren Heizgerätegehäuse eine Brenneranordnung, ein Verbrennungsluft zur Brenneranordnung förderndes Verbrennungsluftgebläse und eine Wärmetauscheranordnung angeordnet. Die das Heizgerätegehäuse durchströmende Heizluft umströmt diese Systembereiche in einem Heizluftströmungsraum an ihren Außenumfangsbereichen und kann dabei insbesondere beim Umströmen der Wärmetauscheranordnung Wärme aufnehmen. Die Verbrennungsluft wird über einen Verbrennungslufteintrittsbereich zu dem Verbrennungsluftgebläse geleitet. Der Verbrennungslufteintrittsbereich umfasst einen Verbrennungslufteintrittsstutzen, welcher sich von dem Verbrennungsluftgebläse im Wesentlichen radial bezüglich einer Gehäuselängsachse des Heizgerätegehäuses nach außen weg erstreckt und eine Gehäusewandung des Heizgerätegehäuses durchsetzt.

Es ist die Aufgabe der vorliegenden Erfindung, ein kompakt aufgebautes Fahrzeugheizgerät bzw. ein Verbrennungsluftgebläse dafür mit verminderter Geräuschemission bereitzustellen.

Diese Aufgabe wird gelöst durch ein Fahrzeugheizgerät, umfassend:
- ein von zu erwärmender Heizluft durchströmbares, in Richtung einer Gehäuselängsachse sich erstreckendes Heizgerätegehäuse mit einem Heizlufteintrittsbereich und einem Heizluftaustrittsbereich,
- eine in dem Heizgerätegehäuse angeordnete Brenneranordnung,
- ein in dem Heizgerätegehäuse angeordnetes Verbrennungsluftgebläse zum Fördern von Verbrennungsluft zu der Brenneranordnung,
- eine in dem Heizgerätegehäuse angeordnete und von das Heizgerätegehäuse durchströmender Heizluft umströmbare Wärmetauscheranordnung. Erfindungsgemäß ist dem Verbrennungsluftgebläse ein im Wesentlichen in dem Heizgerätegehäuse angeordneter Verbrennungsluftansaugschalldämpfer mit einem dem Heizgerätegehäuse einstückig ausgebildeten Schalldämpfergehäuse zugeordnet

Da bei dem erfindungsgemäß aufgebauten Fahrzeugheizgerät dem Verbrennungsluftgebläse ein Verbrennungsluftansaugschalldämpfer zugeordnet ist, wird der Austritt von insbesondere im Bereich des Verbrennungsluftgebläses entstehenden Geräuschen über den Verbrennungslufteintrittsbereich wesentlich unterdrückt, wobei aufgrund der Integration des Verbrennungsluftansaugschalldämpfers in das Heizgerätegehäuse eine kompakte und einfach herzustellende Bauart des Fahrzeugheizgeräts erreicht wird, so dass auf Anbauteile insbesondere außerhalb des Heizgerätegehäuses verzichtet werden kann.

Dabei kann zur Ausnutzung des im Heizgerätegehäuse zur Verfügung stehenden Volumens vorgesehen sein, dass das Verbrennungsluftgebläse und die Wärmetauscheranordnung in dem Heizgerätegehäuse bezüglich einer Gehäuselängsachse im Wesentlichen zentral angeordnet sind und an ihren Außenumfangsbereichen von das Heizgerätegehäuse in einem das Verbrennungsluftgebläse und die Wärmetauscheranordnung umgebenden Heizluftströmungsraum durchströmender Heizluft umströmbar sind, wobei der Verbrennungsluftansaugschalldämpfer im Wesentlichen in dem Heizluftströmungsraum angeordnet ist.

Zum einfachen Integrieren von Systembereichen des Fahrzeugheizgeräts in das Heizgerätegehäuse wird vorgeschlagen, dass das Heizgerätegehäuse zwei vorzugsweise im Wesentlichen quer zur Gehäuselängsachse aneinander anschließende Gehäuseschalen umfasst, und dass das Schalldämpfergehäuse mit einer der Gehäuseschalen einstückig ausgebildet ist. Dabei kann wenigstens eine, vorzugsweise beide Gehäuseschalen mit Kunststoffmaterial aufgebaut sein. Der Aufbau mit Kunststoffmaterial ermöglicht in einfacher Art und Weise die einstückige, also integrale Ausgestaltung des Schalldämpfergehäuses mit einer der Gehäuseschalen des Heizgerätegehäuses.

Um die für die Verbrennung erforderliche Verbrennungsluft in das Innere des Heizgerätegehäuses leiten zu können, ohne jedoch eine Durchmischung mit der darin strömenden Heizluft zu erzeugen, wird vorgeschlagen, dass das Verbrennungsluftgebläse einen eine Gehäusewandung des Heizgerätegehäuses im Bereich einer in der einen Gehäuseschale ausgebildeten Öffnung durchsetzenden und Verbrennungsluft zu dem Verbrennungsluftansaugschalldämpfer führenden Verbrennungslufteintrittsbereich aufweist. Dabei kann der Verbrennungslufteintrittsbereich einen Verbrennungslufteintrittsstutzen mit einer sich im Wesentlichen orthogonal zur Gehäuselängsachse erstreckenden Stutzenlängsachse umfassen.

Zum Herstellen einer Strömungsverbindung zwischen dem Verbrennungsluftansaugschalldämpfer und dem Verbrennungsluftgebläse wird vorgeschlagen, dass das Schalldämpfergehäuse an der einen Gehäuseschale angrenzend an die Öffnung ausgebildet ist, oder/und dass das Schalldämpfergehäuse an der einen Gehäuseschale in Richtung der Gehäuselängsachse oder/und auf die Öffnung zu offen ist.

Bei dem erfindungsgemäßen Fahrzeugheizgerät kann das Verbrennungsluftgebläse, umfassen:
- einen Gebläsekörper mit einem um eine Drehachse sich ringartig erstreckenden, an einer ersten Axialseite des Gebläsekörpers in einer ersten Axialrichtung offenen Förderkanal,
- ein dem Gebläsekörper an seiner ersten Axialseite gegenüberliegendes Verbrennungsluftförderrad mit einem den Förderkanal überdeckenden, ringartigen Förderbereich mit einer Mehrzahl von in Umfangsrichtung um die Gebläseachse aufeinanderfolgenden Förderschaufeln,
- einen an einer der ersten Axialseite des Gebläsekörpers entgegengesetzten zweiten Axialseite des Gebläsekörpers angeordneten Gebläsemotor mit einer um die Drehachse drehbaren Motorwelle, wobei die Motorwelle mit dem Verbrennungsluftförderrad zur gemeinsamen Drehung um die Drehachse gekoppelt ist,
- einen zu dem Förderkanal offenen Förderkanaleintrittsbereich in dem Gebläsekörper zum Eintritt von Verbrennungsluft in den Förderkanal,
wobei der Verbrennungsluftansaugschalldämpfer im Wesentlichen an der zweiten Axialseite des Gebläsekörpers angeordnet ist.

Mit dem an der zweiten Axialseite vorgesehenen Verbrennungsluftansaugschalldämpfer wird eine radial kompakte und somit leicht in ein Heizgerätegehäuse integrierbare Bauweise erhalten.

Um einen für eine gute Schalldämpfungscharakteristik vorteilhaften, ausreichend langen Strömungsweg der Verbrennungsluft zu erreichen, wird vorgeschlagen, dass der Verbrennungsluftansaugschalldämpfer einen Verbrennungsluft von einem Verbrennungslufteintrittsbereich des Verbrennungsluftgebläses im Wesentlichen in einer der ersten Axialrichtung entgegengesetzten zweiten Axialrichtung von der zweiten Axialseite des Gebläsekörpers weg leitenden ersten Schalldämpferströmungsweg und einen Verbrennungsluft im Wesentlichen in der ersten Axialrichtung auf den Förderkanaleintrittsbereich zu leitenden zweiten Schalldämpferströmungsweg umfasst.

Da in einem Heizluftgebläse der zur Verfügung stehende Radialbauraum im Allgemeinen begrenzt ist, wird für einen ausreichend langen Strömungsweg der Verbrennungsluft im Verbrennungsluftansaugschalldämpfer ferner vorgeschlagen, dass der der erste Schalldämpferströmungsweg und der zweite Schalldämpferströmungsweg sich im Wesentlichen parallel zur Drehachse erstrecken oder/und der erste Schalldämpferströmungsweg radial außerhalb des zweiten Schalldämpferströmungswegs angeordnet ist.

Zum Führen der zu dem Verbrennungsluftgebläse zu leitenden Verbrennungsluft in den Verbrennungsluftansaugschalldämpfer kann vorgesehen sein, dass der Verbrennungslufteintrittsbereich einen vorzugsweise mit dem Gebläsekörper integral ausgebildeten Verbrennungslufteintrittsstutzen mit einer sich im Wesentlichen orthogonal zur Drehachse erstreckenden Stutzenlängsachse umfasst, wobei in dem Gebläsekörper eine an den Verbrennungslufteintrittsstutzen anschließende erste Verbrennungsluftdurchströmöffnung vorzugsweise mit im Wesentlichen parallel zur Drehachse orientierter erster Öffnungsachse und eine zum Förderkanaleintrittsbereich offene zweite Verbrennungsluftdurchströmöffnung vorzugsweise mit im Wesentlichen parallel zur Drehachse orientierter zweiter Öffnungsachse vorgesehen sind.

Dabei kann ein einfacher und kompakter Aufbau dadurch gewährleistet werden, dass die erste Verbrennungsluftdurchströmöffnung und die zweite Verbrennungsluftdurchströmöffnung in einem an der zweiten Axialseite des Gebläsekörpers sich im Wesentlichen in der zweiten Axialrichtung erstreckenden, vorzugsweise mit dem Gebläsekörper integral ausgebildeten Durchströmöffnungsansatz ausgebildet sind.

Um den in einem Fahrzeugheizgerät im Allgemeinen zur Verfügung stehenden Radialbauraum effizient auszunutzen, wird vorgeschlagen, dass die erste Verbrennungsluftdurchströmöffnung radial außerhalb der zweiten Verbrennungsluftdurchströmöffnung angeordnet ist.

Zum Erreichen der angestrebten Schalldämpfungscharakteristik kann in dem Schalldämpfergehäuse Schalldämpfungsmaterial angeordnet sein.

Es ist darauf hinzuweisen, dass im Sinne der vorliegenden Erfindung derartiges Schalldämpfungsmaterial ein beispielsweise poröses, schaumstoffartiges oder faserartiges Material ist, das eine höhere Schalldämpfungsrate aufweist, als beispielsweise das Aufbaumaterial, z. B. Kunststoffmaterial, des Schalldämpfergehäuses selbst.

Der erste Schalldämpferströmungsweg und der zweite Schalldämpferströmungsweg sind vorzugsweise im Wesentlichen in dem Schalldämpfergehäuse ausgebildet. Dies kann in einfacher Weise dadurch erreicht werden, dass in dem Schalldämpfergehäuse ein aus Schalldämpfungsmaterial aufgebauter Schalldämpfungskörper angeordnet ist, wobei der erste Schalldämpferströmungsweg und der zweite Schalldämpferströmungsweg in dem Schalldämpfungskörper ausgebildet sind.

Im Heizlufteintrittsbereich kann ein mit der Motorwelle zur gemeinsamen Drehung um die Drehachse gekoppeltes Heizluftförderrad vorgesehen ist.

Die vorliegende Erfindung wird nachfolgend mit Bezug auf die beiliegenden Figuren detailliert beschrieben. Es zeigt:
- Fig. 1: eine Längsschnittansicht eines Fahrzeugheizgeräts;
- Fig. 2: eine Längsschnittansicht eines in dem Fahrzeugheizgerät der Fig. 1 einsetzbaren Verbrennungsluftgebläses;
- Fig. 3: eine Längsschnittansicht eines bei dem Verbrennungsluftgebläse der Fig. 2 eingesetzten Schalldämpfungskörpers;
- Fig. 4: eine Querschnittsansicht des bei dem Verbrennungsluftgebläse der Fig. 2 eingesetzten Schalldämpfungskörpers, geschnitten längs einer Linie IV-IV in Fig. 3;
- Fig. 5: eine Seitenansicht eines Heizgerätegehäuses;
- Fig. 6: eine Seitenansicht einer Gehäuseschale des in Fig. 5 dargestellten Heizgerätegehäuses;
- Fig. 7: eine Axialansicht der Gehäuseschale der Fig. 6, betrachtet in Blickrichtung VII in Fig. 6;
- Fig. 8: eine Draufsicht auf die Gehäuseschale der Fig. 6 in Blickrichtung VIII in Fig. 6;
- Fig. 9: eine Querschnittsansicht der Gehäuseschale der Fig. 8, geschnitten längs einer Linie IX-IX in Fig. 8;
- Fig. 10: eine der Fig. 8 entsprechende Ansicht einer alternativ aufgebauten Gehäuseschale;
- Fig. 11: eine Querschnittsansicht der Gehäuseschale der Fig. 10, geschnitten längs einer Linie XI-XI in Fig. 8;

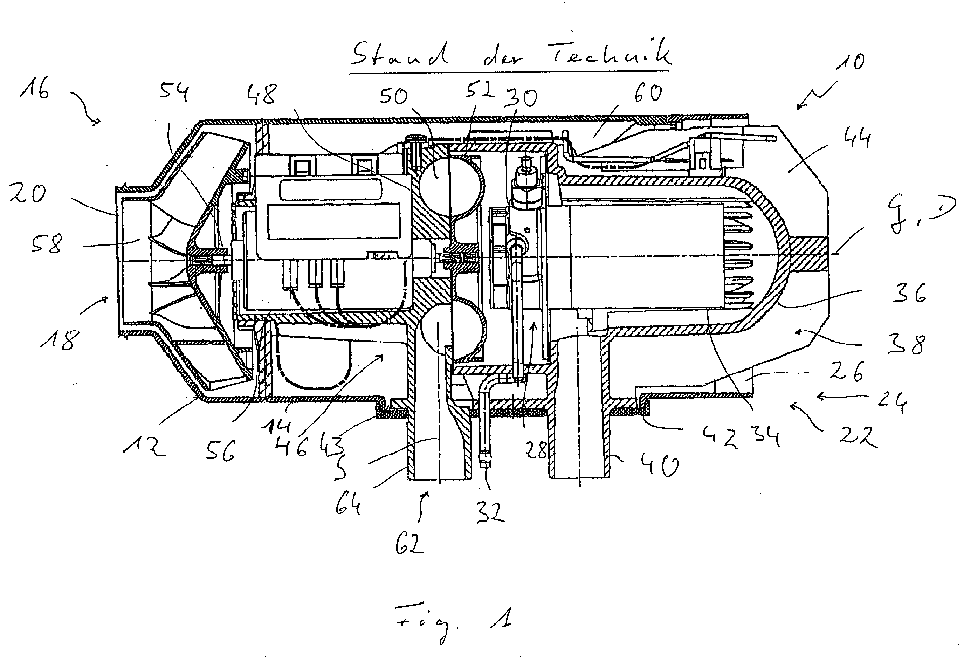

Die Fig. 1 zeigt ein aus der DE 20 2004 015 442 U1 bekanntes Fahrzeugheizgerät 10 im Längsschnitt, geschnitten entlang einer Gehäuselängsachse G. Bevor im Folgenden der grundsätzliche Aufbau dieses Fahrzeugheizgeräts 10 erläutert wird, ist darauf hinzuweisen, dass dieser Aufbau auch bei einem erfindungsgemäß ausgestalteten Fahrzeugheizgerät realisiert sein kann. Insofern treffen die nachfolgenden Ausführungen zum Aufbau des Fahrzeugheizgeräts 10 im Wesentlichen auch zu für ein erfindungsgemäß aufgebautes Fahrzeugheizgerät.

Das Fahrzeugheizgerät 10 umfasst ein allgemein mit 12 bezeichnetes Heizgerätegehäuse mit einer in Richtung der Gehäuselängsachse G sich erstreckenden Gehäusewandung 14. An einem axialen Endbereich 16 des Heizgerätegehäuses 12 ist ein Heizlufteintrittsbereich 18 mit einer zur Gehäuselängsachse G vorzugsweise konzentrischen Heizlufteintrittsöffnung 20 vorgesehen. Am anderen axialen Endbereich 22 des Heizgerätegehäuses 12 ist ein Heizluftaustrittsbereich 24 mit einer zur Gehäuselängsachse G vorzugsweise konzentrischen Heizluftaustrittsöffnung 26 vorgesehen.

Im Inneren des Heizgerätegehäuses 12 ist eine allgemein mit 28 bezeichnete Brenneranordnung angeordnet. Diese umfasst ein Brennkammergehäuse 30, in welcher beispielsweise ein über eine Brennstoffzuführleitung 32 zugeführten flüssigen Brennstoff aufnehmendes poröses Verdampfermedium vorgesehen sein kann. Der in dem porösen Verdampfermedium aufgenommene flüssige Brennstoff wird in Richtung zu einer Brennkammer abgegeben und dort zusammen mit Verbrennungsluft verbrannt, so dass die dabei entstehenden Verbrennungsabgase entlang eines Flammrohrs 34 strömen. Die Brenneranordnung 28 ist zusammen mit dem Flammrohr 34 an einem Gehäuse 36 einer allgemein mit 38 bezeichneten Wärmetauscheranordnung getragen. An einer Innenseite des Gehäuses 36 strömen die das Flammrohr 34 verlassenden Verbrennungsabgase in Richtung zu einem Abgasaustrittstutzen 40, welcher die Gehäusewandung 14 des Heizgerätegehäuses 12 bzw. ein eine Öffnung 43 in der Gehäusewandung 14 abschließendes, deckelartiges Abschlusselement 42 im Wesentlichen radial bezüglich der Gehäuselängsachse G durchsetzt. An seiner Außenseite weist das Gehäuse 36 eine Mehrzahl von Wärmeübertragungsrippen 44 auf, welche von der in Richtung zum Heizluftaustrittsbereich 24 strömenden Heizluft umströmbar sind und dabei Wärme auf die Heizluft übertragen können.

In dem Heizgerätegehäuse 12 ist ferner ein allgemein mit 46 bezeichnetes Verbrennungsluftgebläse vorgesehen. Dieses als Seitenkanalgebläse ausgebildete Verbrennungsluftgebläse 46 umfasst einen scheibenartigen Gebläsekörper 48, der an einer Axialseite einen axial offenen, die Gehäuselängsachse G ringartig umgebenden Förderkanal 50 aufweist. Dem Förderkanal 50 liegt ein Verbrennungsluftförderrad 52 gegenüber, das an einer Motorwelle 54 eines Gebläsemotors 56 zur gemeinsamen Drehung mit diesem um eine der Gehäuselängsachse G beispielsweise im Wesentlichen entsprechende oder dazu parallele Drehachse D gekoppelt ist. Mit der Motorwelle 54 des Gebläsemotors 56 ist ferner ein im Bereich des Heizlufteintrittsbereichs 18 angeordnetes Heizluftförderrad 58 zur gemeinsamen Drehung um die Drehachse D gekoppelt. Somit treibt der Gebläsemotor 56 sowohl das Verbrennungsluftförderrad 52, als auch das Heizluftförderrad 58 an, um einerseits Verbrennungsluft in Richtung zu der Brenneranordnung 30 zu leiten, und andererseits Heizluft in einen im Heizgerätegehäuse 12 gebildeten Heizluftströmungsraum 60 zu fördern. Die den Heizluftströmungsraum 60 im Wesentlichen in Richtung der Gehäuselängsachse G durchströmende Heizluft umströmt das Verbrennungsluftgebläse 46 und die Wärmetauscheranordnung 38 an ihren Außenseiten und nimmt dabei insbesondere beim Umströmen des Gehäuses 36 der Wärmetauscheranordnung 38 Wärme auf und verlässt das Heizgerätegehäuse 12 am Heizluftaustrittsbereich 22 in erwärmtem Zustand.

Zum Zuführen der Verbrennungsluft zum Förderkanal 50 ist am Gebläsekörper 48 des Verbrennungsluftgebläses 46 ein Verbrennungslufteintrittsbereich 62 vorgesehen, welcher einen Verbrennungslufteintrittsstutzen 64 mit bezüglich der Drehachse D bzw. der Gehäuselängsachse G im Wesentlichen radial sich erstreckender Stutzenlängsachse S umfasst. Der Verbrennungslufteintrittsstutzen 64 durchsetzt die Öffnung 43 in der Gehäusewandung 14 bzw. das Abschlusselement 42 und erstreckt sich im Wesentlichen radial durch den Heizluftströmungsraum 60 hindurch. Außerhalb des Heizgerätegehäuses 12 kann an den Verbrennungslufteintrittsstutzen 64 eine Leitung, beispielsweise ein flexibler Schlauch, angeschlossen werden.

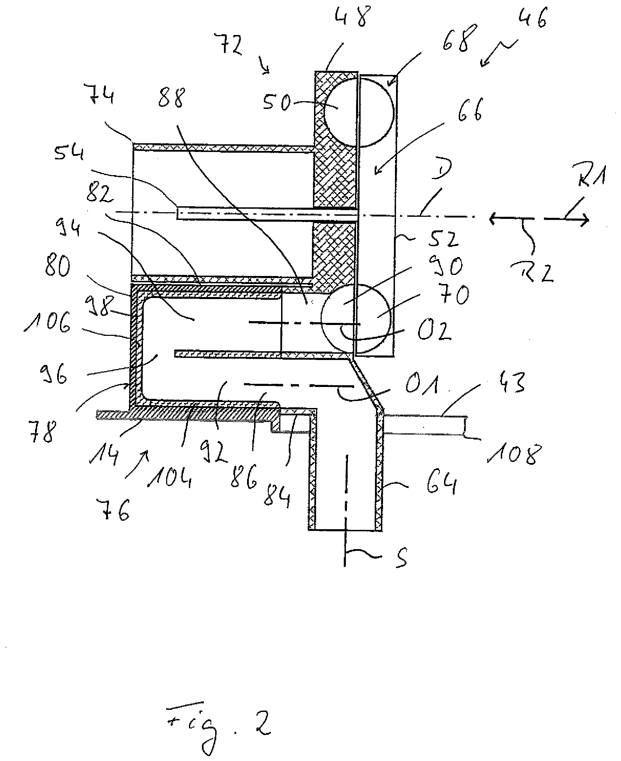

Nachfolgend wird mit Bezug auf die Fig. 2-4 ein gemäß den Prinzipien der vorliegenden Erfindung aufgebautes Verbrennungsluftgebläse beschrieben, welches bei dem vorangehend mit Bezug auf die Fig. 1 beschriebenen Fahrzeugheizgerät eingesetzt werden kann. Dabei werden Komponenten bzw. Baugruppen, welche vorangehend mit Bezug auf die Fig. 1 beschriebenen Komponenten bzw. Baugruppen hinsichtlich Aufbau und Funktion entsprechen, mit den gleichen Bezugszeichen bezeichnet, wie sie vorangehend mit Bezug auf die Fig. 1 verwendet wurden.

Das in Fig. 2 dargestellte Verbrennungsluftgebläse 46 umfasst den beispielsweise aus Metallmaterial aufgebauten, scheibenartigen Gebläsekörper 48, der an seiner ersten Axialseite 66 den in einer ersten Axialrichtung R1 offenen und die Drehachse D ringartig umgebenden Förderkanal 50 aufweist. Dem Förderkanal 50 liegt ein ringartiger Förderbereich 68 des Verbrennungsluftförderrads 52 mit einer Mehrzahl von daran vorgesehenen Förderschaufeln 70 axial gegenüber. Die Motorwelle 54 durchsetzt den Gebläsekörper 48 und ist in ihrem an der ersten Axialseite über diesen hervorstehenden Bereich mit dem Verbrennungsluftförderrad 52 zur gemeinsamen Drehung um die Drehachse D gekoppelt.

An einer der ersten Axialseite 66 entgegengesetzt orientierten zweiten Axialseite 72 ist ein mit dem Gebläsekörper 48 vorzugsweise integral ausgebildetes und in einer der ersten Axialrichtung R1 im Wesentlichen entgegengesetzt orientierten zweiten Axialrichtung R2 sich erstreckendes Motorgehäuse 74 vorgesehen. In dem Motorgehäuse 74 kann der in Figur 1 dargestellte Gebläsemotor 56 aufgenommen werden.

Außerhalb des Motorgehäuses 74 ist ein allgemein mit 76 bezeichneter Verbrennungsluftansaugschalldämpfer vorgesehen. Der Verbrennungsluftansaugschalldämpfer 76 umfasst ein im Wesentlichen topfartig gestaltetes Schalldämpfergehäuse 78 mit einer Bodenwandung 80 und einer Umfangswandung 82. Das Schalldämpfergehäuse 78 ist bezüglich der Gehäuselängsachse G radial zwischen dem Motorgehäuse 74 und der Gehäusewandung 14 und ist in seinem an die Gehäusewandung 14 angrenzenden Bereich mit dieser einstückig, also integral bzw. als ein Materialblock damit ausgebildet.

Mit seiner Umfangswandung 82 ist das Schalldämpfergehäuse 78 angrenzend an einen am Gebläsekörper 48 vorzugsweise integral ausgebildeten Durchströmöffnungsansatz 84 angeordnet und kann an diesem festgelegt sein. In dem Durchströmöffnungsansatz 84 sind eine erste Verbrennungsluftdurchströmöffnung 86 und eine zweite Verbrennungsluftdurchströmöffnung 88 mit zueinander und zur Drehachse D im Wesentlichen parallelen Öffnungsachsen 01, 02 ausgebildet. An die erste Verbrennungsluftdurchströmöffnung 86 schließt der mit dem Gebläsekörper 48 vorzugsweise integral ausgebildete Verbrennungslufteintrittsstutzen 64 an. Dieser weist eine zu den Öffnungsachsen O1, 02 bzw. auch zur Drehachse D im Wesentlichen orthogonal orientierte Stutzenlängsachse S auf. Die über den Verbrennungslufteintrittsstutzen 64 im Wesentlichen von radial außen nach radial innen strömende Verbrennungsluft wird im Übergangsbereich zur ersten Verbrennungsluftdurchströmöffnung 86 im Wesentlichen um 90° umgelenkt und strömt in der bzw. aus der ersten Verbrennungsluftdurchströmöffnung 86 im Wesentlichen in der zweiten Axialrichtung R2. In der zweiten Verbrennungsluftdurchströmöffnung 88 strömt die Verbrennungsluft in entgegengesetzter Richtung, also im Wesentlichen in der ersten Axialrichtung R1 auf einen Förderkanaleintrittsbereich 90 zu, über welchen die Verbrennungsluft in den ringartigen Förderkanal 50 eintritt. Dabei sind die beiden Verbrennungsluftdurchströmöffnungen 86, 88 vorzugsweise im Wesentlichen radial gestaffelt angeordnet, so dass die erste Verbrennungsluftdurchströmöffnung 86 radial außerhalb der zweiten Verbrennungsluftdurchströmöffnung 88 und auch radial außerhalb des Förderkanals 50 positioniert ist.

In dem axial anschließend an den Durchströmöffnungsansatz 84 angeordneten Schalldämpfergehäuse 78 sind in Zuordnung zu den beiden Verbrennungsluftdurchströmöffnungen 86, 88 Schalldämpferströmungswege 92, 94 ausgebildet. Dabei erstreckt sich ein erster Schalldämpferströmungsweg 92 anschließend an die erste Verbrennungsluftdurchströmöffnung 86 im Wesentlichen in Richtung der Öffnungsachse O1, so dass die über die erste Verbrennungsluftdurchströmöffnung 86 in den ersten Schalldämpferströmungsweg 92 eintretende Verbrennungsluft im ersten Schalldämpferströmungsweg 92 im Wesentlichen in der zweiten Axialrichtung R2 strömt. In einem Umlenkbereich 96, in welchem der zweite Schalldämpferströmungsweg 94 an den ersten Schalldämpferströmungsweg 92 anschließt, wird die Verbrennungsluft um etwa 180° umgelenkt, so dass die Verbrennungsluft im zweiten Schalldämpferströmungsweg 94 im Wesentlichen in der ersten Axialrichtung R1 auf die zweite Verbrennungsluftdurchströmöffnung 88 zu strömt.

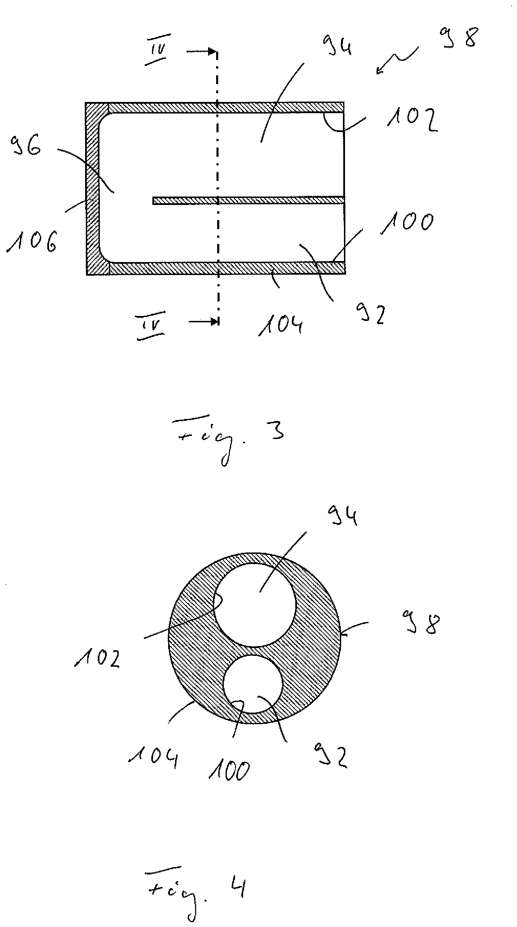

Im Schalldämpfergehäuse 78 ist ein mit Schalldämpfungsmaterial aufgebauter Schalldämpfungskörper 98 angeordnet. Die Umfangskontur des Schalldämpfungskörpers 98 ist an die Innenkontur des Schalldämpfergehäuses 78 angepasst, so dass dieser an einer Innenumfangsfläche der Umfangswandung 82 und einer Innenbodenfläche der Bodenwandung 80 anliegt und daran gehalten ist. In dem in den Fig. 3 und 4 dargestellten Schalldämpfungskörper 98 sind die beiden Schalldämpferströmungswege 92, 94 bildende, beispielsweise mit kreisrundem Querschnitt bereitgestellte Öffnungen 100, 102 ausgebildet. Zum Bereitstellen des Umlenkungsbereichs 96 kann der Schalldämpfungskörper 98 mehrteilig ausgebildet sein mit einem im Wesentlichen zylindrisch geformten und die Öffnungen 100, 102 bereitstellenden Körperteil 104 und einem dieses axial abschließenden und im Wesentlichen den Umlenkbereich 96 bereitstellenden Körperteil 106. Vorteilhafterweise ist der Schalldämpfungskörper 98 vollständig im Schalldämpfergehäuse 78 untergebracht, so dass am Gebläsekörper 48 bzw. dem Durchströmöffnungsansatz 84 keine konstruktiven Maßnahmen zur Aufnahme von Schalldämpfungsmaterial vorgesehen sein müssen.

In Fig. 2 ist abschnittsweise auch die Gehäusewandung 14 des Heizgerätegehäuses 12 mit der darin im Bereich eines nach radial außen vorspringenden Kragens 108, an welchem das Abschlusselement 42 festgelegt werden kann, ausgebildeten Öffnung 43 dargestellt. Man erkennt, dass das Verbrennungsluftgebläse 46 zusammen mit dem Verbrennungsluftansaugschalldämpfer 76 im Inneren des Heizgerätegehäuses 12, insbesondere in dem von der Heizluft durchströmbaren Heizluftströmungsraum 60 angeordnet ist. Der Verbrennungslufteintrittsstutzen 64 ist im Wesentlichen so orientiert und auch bezüglich des Gebläsekörpers 48 positioniert, wie dies bei der Ausgestaltung des aus dem Stand der Technik bekannten und in Fig. 1 dargestellten Verbrennungsluftgebläses der Fall ist. Da das mit der Gehäusewandung 14 integral ausgebildete Schalldämpfergehäuse 78 mit seiner topfartigen Struktur so angeordnet ist, dass es in der Richtung der Gehäuselängsachse G bzw. auf die Öffnung 43 zu und mit seinem offenen Bereich an diese angrenzend positioniert ist, kann der Gebläsekörper 48 mit dem integral daran ausgebildeten Durchströmöffnungsansatz 84 im Randbereich der Öffnung 43 unmittelbar angrenzend an das Schalldämpfergehäuse 78 positioniert werden, so dass eine im Wesentlichen leckagefreie Durchströmung mit Verbrennungsluft gewährleistet ist. In diesem Angrenzungsbereich des Schalldämpfergehäuses 78 an den Gebläsekörper 48 können diese Bauteile miteinander materialschlüssig, durch Verbindungsmittel, wie zum Beispiel Schraubbolzen, oder/und durch Ineinandereinstecken miteinander verbunden sein. Auf diese Art und Weise kann eine Durchmischung der Verbrennungsluft mit in dem Heizgerätegehäuse 12 strömender Heizluft vermieden werden.

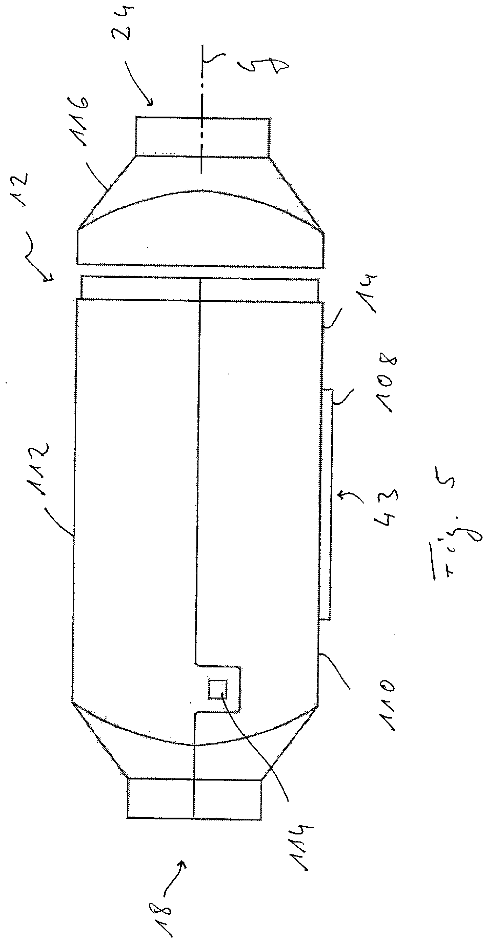

Die Figur 5 zeigt ein Heizgerätegehäuse 12, welches für das in Fig. 1 dargestellte Fahrzeugheizgerät 10 eingesetzt werden kann. Das Heizgerätegehäuse 12 umfasst zwei in Richtung der Gehäuselängsachse G langgestreckte und quer zur Gehäuselängsachse G aneinander anschließende Gehäuseschalen 110, 112. Diese können durch ineinander eingreifende Rastanordnungen 114 verbunden sein. Die beiden Gehäuseschalen 110, 112 bilden zusammen im Heizlufteintrittsbereich 18 die in Fig. 1 erkennbare Heizlufteintrittsöffnung 20. der Heizluftaustrittsbereich 24 mit seiner Heizluftaustrittsöffnung 26 ist an einem in Richtung der Gehäuselängsachse G an die beiden Gehäuseschalen 110, 112 angesetzten bzw. auf diese aufgesteckten Gehäuseabschlussteil 116 vorgesehen.

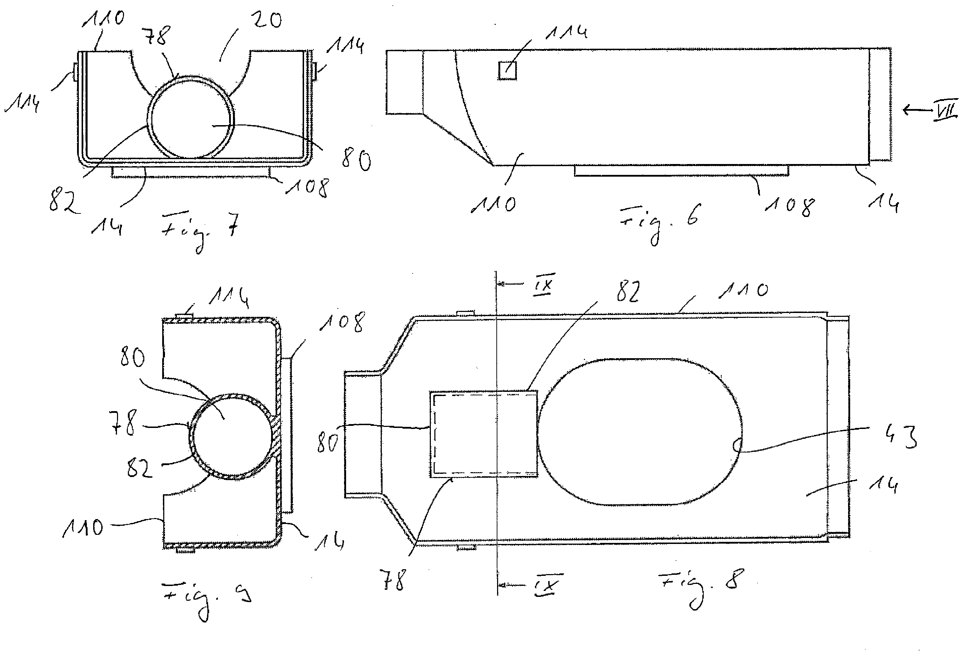

Die Fig. 7 bis 9 zeigen detaillierter die die Öffnung 43 und den diese umgebenden Kragen 108 aufweisende Gehäuseschale 110. Die Gehäuseschale 110 stellt die Gehäusewandung 14 bereit, in deren Bereich das Schalldämpfergehäuse 78 an das Heizgerätegehäuse 12 angrenzt bzw. mit diesem einstückig ausgebildet ist. Deutlich zu erkennen ist in Fig. 8, dass das Schalldämpfergehäuse 78 mit seiner Umfangswandung 82 unmittelbar angrenzend an die Öffnung 43 in der Gehäusewandung 14 bzw. der Gehäuseschale 110 endet, so dass, wie in Figur. 2 dargestellt, der Gebläsekörper 48 des Verbrennungsluftgebläses 46 unmittelbar angrenzend an das Schalldämpfergehäuse 78 mit dem darin aufgenommenen Schalldämpfungskörper positioniert werden kann.

Diese integrale Ausgestaltung der Gehäuseschale 110 mit dem Schalldämpfergehäuse 78 kann in besonders einfacher Art und Weise durch Herstellung der Gehäuseschale 110 aus Kunststoffmaterial realisiert werden. Auch die andere Gehäuseschale 112 und das Gehäuseabschlussteil 116 können vorzugsweise aus Kunststoffmaterial hergestellt sein.

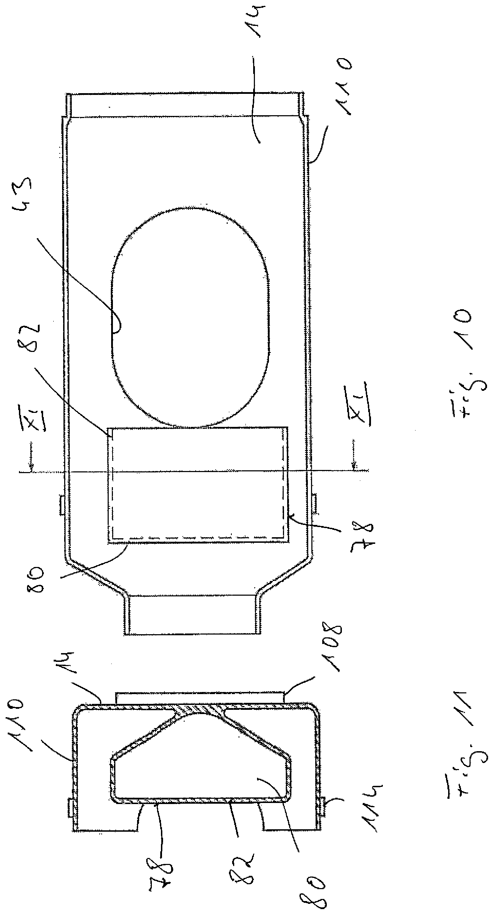

Die Fig. 10 und 11 zeigen eine alternative Ausgestaltung der Gehäuseschale 110 bzw. des an dieser integral ausgebildeten Schalldämpfergehäuses 78. Während bei dem in den Fig. 6-9 dargestellten Aufbau das Schalldämpfergehäuse 78 eine im Wesentlichen kreisrunde Querschnittsgeometrie aufweist, ist das in den Fig. 10 und 11 dargestellt Schalldämpfergehäuse 78 mit dem Wesentlichen abgeflachter, beispielsweise näherungsweise fünfeckiger Querschnittsgeometrie aufgebaut. Das Schalldämpfergehäuse 78 ist somit quer zur Gehäuselängsachse G deutlich weiter ausgedehnt, als bei der vorangehend beschriebenen Ausgestaltungsform, so dass mehr Volumen für die darin bereitzustellenden Schalldämpferströmungswege gebildet ist. Somit wird es möglich, auch diese Schalldämpferströmungswege mit größerem Querschnitt bereitzustellen oder/und eine mehrfache mäandernde Struktur der Schalldämpferströmungswege vorzusehen, um ein weiter verbessertes Schalldämpfungsverhalten zu erzielen. Diese Struktur kann beispielsweise entsprechend der Ausgestaltung des in das Schalldämpfergehäuse 78 einzusetzenden Schalldämpfungskörpers erreicht werden.

Das Heizgerätegehäuse 12 kann insbesondere auch hinsichtlich der Ausgestaltung der beiden Gehäuseschalen 110, 112 anders aufgebaut sein, als in den Figuren dargestellt. So kann die Trennlinie bzw. Trennebene zwischen den beiden quer zur Gehäuselängsachse G aneinander anschließenden Gehäuseschalen 110, 112 zur Gehäuselängsachse G geneigt sein oder/und kann gekrümmt sein. Ferner müssen die beiden Gehäuseschalen 110, 112 nicht, so wie in den Figuren dargestellt, im Wesentlichen gleich groß dimensioniert sein. Eine der beiden Gehäuseschalen kann beispielsweise deckelartig ausgebildet sein, während die andere der beiden Gehäuseschalen den wesentlichen Umfangsbereich des Heizgerätegehäuses 12 bereitstellen kann.

## Patentansprüche

1. Fahrzeugheizgerät, umfassend:
- ein von zu erwärmender Heizluft durchströmbares, in Richtung einer Gehäuselängsachse (G) sich erstreckendes Heizgerätegehäuse (12) mit einem Heizlufteintrittsbereich (18) und einem Heizluftaustrittsbereich (22),
- eine in dem Heizgerätegehäuse (12) angeordnete Brenneranordnung (28),
- ein in dem Heizgerätegehäuse (12) angeordnetes Verbrennungsluftgebläse (46) zum Fördern von Verbrennungsluft zu der Brenneranordnung (30),
- eine in dem Heizgerätegehäuse (12) angeordnete und von das Heizgerätegehäuse (12) durchströmender Heizluft umströmbare Wärmetauscheranordnung (38),
**dadurch gekennzeichnet, dass** dem Verbrennungsluftgebläse (46) ein im Wesentlichen in dem Heizgerätegehäuse (12) angeordneter Verbrennungsluftansaugschalldämpfer (76) mit einem mit dem Heizgerätegehäuse (12) einstückig ausgebildeten Schalldämpfergehäuse (78) zugeordnet ist.

2. Fahrzeugheizgerät nach Anspruch 1, **dadurch gekennzeichnet, dass** das Verbrennungsluftgebläse (46) und die Wärmetauscheranordnung (38) in dem Heizgerätegehäuse (12) bezüglich der Gehäuselängsachse (G) im Wesentlichen zentral angeordnet sind und an ihren Außenumfangsbereichen von das Heizgerätegehäuse (12) in einem das Verbrennungsluftgebläse (46) und die Wärmetauscheranordnung (38) umgebenden Heizluftströmungsraum (60) durchströmender Heizluft umströmbar sind, wobei der Verbrennungsluftansaugschalldämpfer (76) im Wesentlichen in dem Heizluftströmungsraum (60) angeordnet ist.

3. Fahrzeugheizgerät nach Anspruch 1 oder 2, **dadurch gekennzeichnet**, **dadurch gekennzeichnet, dass** das Heizgerätegehäuse (12) zwei vorzugsweise im Wesentlichen quer zur Gehäuselängsachse (G) aneinander anschließende Gehäuseschalen (110, 112) umfasst, und dass das Schalldämpfergehäuse (78) mit einer der Gehäuseschalen (110, 112) einstückig ausgebildet ist.

4. Fahrzeugheizgerät nach Anspruch 3, **dadurch gekennzeichnet, dass** wenigstens eine, vorzugsweise beide Gehäuseschalen (110, 112) mit Kunststoffmaterial aufgebaut sind.

5. Fahrzeugheizgerät nach Anspruch 3 oder 4, **dadurch gekennzeichnet, dass** das Verbrennungsluftgebläse (46) einen eine Gehäusewandung (14) des Heizgerätegehäuses (12) im Bereich einer in der einen Gehäuseschale (110) ausgebildeten Öffnung (43) durchsetzenden und Verbrennungsluft zu dem Verbrennungsluftansaugschalldämpfer (76) führenden Verbrennungslufteintrittsbereich (62) aufweist.

6. Fahrzeugheizgerät nach Anspruch 5, **dadurch gekennzeichnet, dass** der Verbrennungslufteintrittsbereich (62) einen Verbrennungslufteintrittsstutzen (64) mit einer sich im Wesentlichen orthogonal zur Gehäuselängsachse (G) erstreckenden Stutzenlängsachse (S) umfasst.

7. Fahrzeugheizgerät nach Anspruch 5 oder 6, **dadurch gekennzeichnet, dass** das Schalldämpfergehäuse (78) an der einen Gehäuseschale (110) angrenzend an die Öffnung (43) ausgebildet ist, oder/und dass das Schalldämpfergehäuse (78) an der einen Gehäuseschale (110) in Richtung der Gehäuselängsachse (G) oder/und auf die Öffnung (43) zu offen ist.

8. Fahrzeugheizgerät nach einem der vorangehenden Ansprüche, **dadurch gekennzeichnet, dass** das Verbrennungsluftgebläse (46) umfasst:
- einen Gebläsekörper (48) mit einem um eine Drehachse (D) sich ringartig erstreckenden, an einer ersten Axialseite (66) des Gebläsekörpers (48) in einer ersten Axialrichtung (R1) offenen Förderkanal (50)
- ein dem Gebläsekörper (48) an seiner ersten Axialseite (66) gegenüberliegendes Verbrennungsluftförderrad (52) mit einem den Förderkanal (50) überdeckenden, ringartigen Förderbereich (68) mit einer Mehrzahl von in Umfangsrichtung um die Drehachse (D) aufeinanderfolgenden Förderschaufeln (70),
- einen an einer der ersten Axialseite (66) des Gebläsekörpers (48) entgegengesetzten zweiten Axialseite (72) des Gebläsekörpers (48) angeordneten Gebläsemotor (56) mit einer um die Drehachse drehbaren Motorwelle (54), wobei die Motorwelle (54) mit dem Verbrennungsluftförderrad (52) zur gemeinsamen Drehung um die Drehachse (D) gekoppelt ist,
- einen zu dem Förderkanal (50) offenen Förderkanaleintrittsbereich (90) in dem Gebläsekörper (48) zum Eintritt von Verbrennungsluft in den Förderkanal (50),
wobei der Verbrennungsluftansaugschalldämpfer (76) im Wesentlichen an der zweiten Axialseite (72) des Gebläsekörpers (48) angeordnet ist.

9. Fahrzeugheizgerät nach Anspruch 8, **dadurch gekennzeichnet, dass** der Verbrennungsluftansaugschalldämpfer (76) einen Verbrennungsluft von einem Verbrennungslufteintrittsbereich (62) des Verbrennungsluftgebläses (46) im Wesentlichen in einer der ersten Axialrichtung (R1) entgegengesetzten zweiten Axialrichtung (R2) von der zweiten Axialseite (72) des Gebläsekörpers (48) weg leitenden ersten Schalldämpferströmungsweg (92) und einen Verbrennungsluft im Wesentlichen in der ersten Axialrichtung (R1) auf den Förderkanaleintrittsbereich (90) zu leitenden zweiten Schalldämpferströmungsweg (94) umfasst, vorzugsweise wobei der der erste Schalldämpferströmungsweg (92) und der zweite Schalldämpferströmungsweg (94) sich im Wesentlichen parallel zur Drehachse (D) erstrecken oder/ und der erste Schalldämpferströmungsweg (92) radial außerhalb des zweiten Schalldämpferströmungswegs (94) angeordnet ist.

10. Fahrzeugheizgerät nach Anspruch 8 oder 9, **dadurch gekennzeichnet, dass** der Verbrennungslufteintrittsbereich (62) einen vorzugsweise mit dem Gebläsekörper (48) integral ausgebildeten Verbrennungslufteintrittsstutzen (64) mit einer sich im Wesentlichen orthogonal zur Drehachse (D) erstreckenden Stutzenlängsachse (S) umfasst, wobei in dem Gebläsekörper (48) eine an den Verbrennungslufteintrittsstutzen (64) anschließende erste Verbrennungsluftdurchströmöffnung (86) vorzugsweise mit im Wesentlichen parallel zur Drehachse (D) orientierter erster Öffnungsachse (O1) und eine zum Förderkanaleintrittsbereich (90) offene zweite Verbrennungsluftdurchströmöffnung (88) vorzugsweise mit im Wesentlichen parallel zur Drehachse (D) orientierter zweiter Öffnungsachse (02) vorgesehen sind.

11. Fahrzeugheizgerät nach Anspruch 10, **dadurch gekennzeichnet, dass** die erste Verbrennungsluftdurchströmöffnung (86) und die zweite Verbrennungsluftdurchströmöffnung (88) in einem an der zweiten Axialseite (72) des Gebläsekörpers (48) sich im Wesentlichen in der zweiten Axialrichtung (R2) erstreckenden, vorzugsweise mit dem Gebläsekörper (48) integral ausgebildeten Durchströmöffnungsansatz (84) ausgebildet sind.

12. Fahrzeugheizgerät nach Anspruch 10 oder 11, **dadurch gekennzeichnet, dass** die erste Verbrennungsluftdurchströmöffnung (86) radial außerhalb der zweiten Verbrennungsluftdurchströmöffnung (88) angeordnet ist.

13. Fahrzeugheizgerät nach einem der vorangehenden Ansprüche, **dadurch gekennzeichnet, dass** in dem Schalldämpfergehäuse (78) Schalldämpfungsmaterial angeordnet ist.

14. Fahrzeugheizgerät nach Anspruch 9 und Anspruch 13, **dadurch gekennzeichnet, dass** der erste Schalldämpferströmungsweg (92) und der zweite Schalldämpferströmungsweg (94) im Wesentlichen in dem Schalldämpfergehäuse (78) ausgebildet sind.

15. Fahrzeugheizgerät nach Anspruch 13 und Anspruch 14, **dadurch gekennzeichnet, dass** in dem Schalldämpfergehäuse (78) ein mit Schalldämpfungsmaterial aufgebauter Schalldämpfungskörper (98) angeordnet ist, wobei der erste Schalldämpferströmungsweg (92) und der zweite Schalldämpferströmungsweg (94) in dem Schalldämpfungskörper (98) ausgebildet sind.

16. Fahrzeugheizgerät nach einem der Ansprüche 8-15, **dadurch gekennzeichnet, dass** im Heizlufteintrittsbereich (18) ein mit der Motorwelle (54) zur gemeinsamen Drehung um die Drehachse (D) gekoppeltes Heizluftförderrad (58) vorgesehen ist.

## Claims

1. Vehicle heater, comprising:
- a heater housing (12), through which heating air to be heated can flow and which extends in the direction of the housing longitudinal axis (G), with a heating air inlet area (18) and with a heating air outlet area (22),
- a burner unit (28) arranged in the heater housing (12),
- a combustion air blower (46) arranged in the heater housing (12) for delivering combustion air to the burner unit (30), and
- a heat exchanger unit (38), which is arranged in the heater housing (12) and
around which heating air flowing through the heater housing (12) can flow, **characterized in that** a combustion air intake muffler (76) arranged essentially in the heater housing (12) with a muffler housing (78) made in one piece with the heater housing (12) is associated with the combustion air blower (46).

2. Vehicle heater in accordance with claim 1, **characterized in that** the combustion air blower (46) and the heat exchanger unit (38) are arranged in the heater housing (12) essentially centrally in relation to the housing longitudinal axis (G), and heating air flowing through the heater housing (12) in a heating air flow space (60) surrounding the combustion air blower (46) and the heat exchanger unit (38) can flow around them at their outer circumferential areas, wherein the combustion air intake muffler (76)is arranged essentially in the heating air flow space (60).

3. Vehicle heater in accordance with claim 1 or 2, **characterized in that** the heater housing (12) comprises two housing shells (110, 112) adjoining each other preferably essentially at right angles to the housing longitudinal axis (G) and that the muffler housing (78) is made in one piece with one of the housing shells (110, 112).

4. Vehicle heater in accordance with claim 3, **characterized in that** at least one housing shell and preferably both housing shells (110, 112) is/are made of a plastic material.

5. Vehicle heater in accordance with claim 3 or 4, **characterized in that** the combustion air blower (46) has a combustion air inlet area (62), which passes through a housing wall (14) of the heater housing (12) in the area of an opening (43) formed in one of the housing shells (110) and guides combustion air to the combustion air intake muffler (76).

6. Vehicle heater in accordance with claim 5, **characterized in that** the combustion air inlet area (62) comprises a combustion air inlet pipe (64) with a pipe longitudinal axis (S) extending essentially at right angles to the housing longitudinal axis (G).

7. Vehicle heater in accordance with claim 5 or 6, **characterized in that** the muffler housing (78) is configured such that it adjoins the opening (43) at one of the housing shells (110), or/and that the muffler housing (78) is open at one of the housing shells (110) in the direction of the housing longitudinal axis (G) or/and towards the opening (43).

8. Vehicle heater in accordance with one of the above claims, **characterized in that** the combustion air blower (46) comprises:
- a blower body (48) with a delivery duct (50), which extends in a ring-shaped manner about an axis of rotation (D) and is open in a first axial direction (R1) on a first axial side (66) of the blower body (48),
- a combustion air delivery wheel (52) located opposite the blower body (48) on the first axial side (66) thereof with a ring-shaped delivery area (68) covering the delivery duct (50) with a plurality of delivery blades (70) following each other about the axis of rotation (D) in the circumferential direction,
- a blower motor (56) arranged on a second axial side (72) of the blower body (48), which axial side is opposite the first axial side (66) of the blower body (48), with a motor shaft (54) rotatable about the axis of rotation, wherein the motor shaft (54) is coupled with the combustion air delivery wheel (52) for joint rotation about the axis of rotation (D), and
- a delivery duct inlet area (90) open to the delivery duct (50) in the blower body (48) for the entry of combustion air into the delivery duct (50),
wherein the combustion air intake muffler (76) is arranged essentially on the second axial side (72) of the blower body (48).

9. Vehicle heater in accordance with claim 8, **characterized in that** the combustion air intake muffler (76) comprises a first muffler flow path (92) guiding combustion air from a combustion air inlet area (62) of the combustion air blower (46) essentially in a second axial direction (R2) opposite the first axial direction (R1) away from the second axial side (72) of the blower body (48) and a second muffler flow path (94) guiding combustion air essentially in the first axial direction (R1) towards the delivery duct inlet area (90), preferably wherein the first muffler flow path (92) and the second muffler flow path (94) extend essentially parallel to the axis of rotation (D) or/and the first muffler flow path (92) is arranged radially outside the second muffler flow path (94).

10. Vehicle heater in accordance with claim 8 or 9, **characterized in that** the combustion air inlet area (62) comprises a combustion air inlet pipe (64) made preferably integrally with the blower body (48) with a pipe longitudinal axis (S) extending essentially at right angles to the axis of rotation (D), wherein a first combustion air flow-through opening (86) adjoining the combustion air inlet pipe (64) preferably with a first opening axis (O1) oriented essentially parallel to the axis of rotation (D) and a second combustion air flow-through opening (88) open towards the delivery duct inlet area (90) preferably with a second opening axis (02) oriented essentially parallel to the axis of rotation (D) are provided in the blower body (48).

11. Vehicle heater in accordance with claim 10, **characterized in that** the first combustion air flow-through opening (86) and the second combustion air flow-through opening (88) are formed in a flow-through opening attachment (84), which extends essentially in the second axial direction (R2) on the second axial side (72) of the blower body (48) and is preferably made integrally with the blower body (48).

12. Vehicle heater in accordance with claim 10 or 11, **characterized in that** the first combustion air flow-through opening (86) is arranged radially outside the second combustion air flow-through opening (88).

13. Vehicle heater in accordance with one of the above claims, **characterized in that** muffling material is arranged in the muffler housing (78).

14. Vehicle heater in accordance with claim 9 and claim 13, **characterized in that** the first muffler flow path (92) and the second muffler flow path (94) are formed essentially in the muffler housing (78).

15. Vehicle heater in accordance with claim 13 and claim 14, **characterized in that** a muffler body (98) made of muffling material is arranged in the muffler housing (78), wherein the first muffler flow path (92) and the second muffler flow path (94) are formed in the muffling body (98).

16. Vehicle heater in accordance with one of the claims 8-15, **characterized in that** a heating air delivery wheel (58) coupled with the motor shaft (54) for joint rotation about the axis of rotation (D) is provided in the heating air inlet area (18).

## Revendications

1. Appareil de chauffage pour véhicule, comprenant :
- un boîtier d'appareil de chauffage (12), qui peut être traversé par de l'air de chauffage à chauffer et qui s'étend dans la direction de l'axe longitudinal du boîtier (G), avec une zone d'entrée d'air de chauffage (18) et une zone de sortie d'air de chauffage (22),
- une unité de brûleur (28) disposée dans le boîtier d'appareil de chauffage (12),
- un ventilateur d'air de combustion (46) disposé dans le boîtier d'appareil de chauffage (12) pour fournir de l'air de combustion à l'unité de brûleur (30), et
- une unité d'échangeur de chaleur (38), qui est disposée dans le boîtier d'appareil de chauffage (12) et autour de laquelle l'air de chauffage circulant à travers le boîtier d'appareil de chauffage (12) peut circuler,
**caractérisé en ce qu'**un silencieux d'aspiration d'air de combustion (76) disposé essentiellement dans le boîtier d'appareil de chauffage (12) avec un boîtier de silencieux (78) réalisé d'un seul tenant avec le boîtier d'appareil de chauffage (12) est associé au ventilateur d'air de combustion (46).

2. Appareil de chauffage pour véhicule selon la revendication 1, **caractérisé en ce que** le ventilateur d'air de combustion (46) et l'unité d'échangeur de chaleur (38) sont disposées dans le boîtier d'appareil de chauffage (12) essentiellement au centre par rapport à l'axe longitudinal du boîtier (G), et l'air de chauffage circulant à travers le boîtier d'appareil de chauffage (12) dans un espace d'écoulement d'air de chauffage (60) entourant le ventilateur d'air de combustion (46) et l'unité d'échangeur de chaleur (38) peut circuler autour de celles-ci au niveau de leurs zones périphériques extérieures, le silencieux d'aspiration d'air de combustion (76) étant disposé essentiellement dans l'espace d'écoulement d'air de chauffage (60).

3. Appareil de chauffage pour véhicule selon la revendication 1 ou 2, **caractérisé en ce que** le boîtier d'appareil de chauffage (12) est constitué de deux coques de boîtier (110, 112) se raccordant l'une à l'autre, de préférence essentiellement à angle droit par rapport à l'axe longitudinal du boîtier (G), et **en ce que** le boîtier de silencieux (78) est réalisé d'un seul tenant avec l'une des coques de boîtier (110, 112).

4. Appareil de chauffage pour véhicule selon la revendication 3, **caractérisé en ce qu'**au moins une coque de boîtier et de préférence les deux coques de boîtier (110, 112) est/sont en matière plastique.

5. Appareil de chauffage pour véhicule selon la revendication 3 ou 4, **caractérisé en ce que** le ventilateur d'air de combustion (46) présente une zone d'entrée d'air de combustion (62), qui traverse une paroi de boîtier (14) du boîtier d'appareil de chauffage (12) dans la zone d'une ouverture (43) formée dans l'une des coques de boîtier (110) et guide l'air de combustion vers le silencieux d'aspiration d'air de combustion (76).

6. Appareil de chauffage pour véhicule selon la revendication 5, **caractérisé en ce que** la zone d'entrée d'air de combustion (62) comprend un tuyau d'entrée d'air de combustion (64) avec un axe longitudinal de tuyau (S) s'étendant essentiellement à angle droit par rapport à l'axe longitudinal du boîtier (G).

7. Appareil de chauffage pour véhicule selon la revendication 5 ou 6, **caractérisé en ce que** le boîtier de silencieux (78) est configuré de telle sorte qu'il se raccorde à l'ouverture (43) sur l'une des coques du boîtier (110), ou/et que le boîtier de silencieux (78) est ouvert sur l'une des coques du boîtier (110) dans la direction de l'axe longitudinal du boîtier (G) ou/et vers l'ouverture (43).

8. Appareil de chauffage pour véhicule selon l'une des revendications précédentes, **caractérisé en ce que** le ventilateur d'air de combustion (46) comprend :
- un corps de ventilateur (48) avec un conduit d'alimentation (50), qui s'étend de manière annulaire autour d'un axe de rotation (D) et qui est ouvert dans une première direction axiale (R1) sur un premier côté axial (66) du corps de ventilateur (48),
- une roue d'alimentation en air de combustion (52) située à l'opposé du corps de ventilateur (48) sur le premier côté axial (66) de celui-ci avec une zone d'alimentation annulaire (68) recouvrant le conduit d'alimentation (50) avec une pluralité d'ailettes d'alimentation (70) se suivant autour de l'axe de rotation (D) dans la direction circonférentielle,
- un moteur de ventilateur (56) disposé sur un deuxième côté axial (72) du corps de ventilateur (48), lequel côté axial est opposé au premier côté axial (66) du corps de ventilateur (48), avec un arbre de moteur (54) pouvant tourner autour de l'axe de rotation, dans lequel l'arbre de moteur (54) est couplé à la roue d'alimentation en air de combustion (52) pour une rotation conjointe autour de l'axe de rotation (D), et
- une zone d'entrée du conduit d'alimentation (90) ouverte sur le conduit d'alimentation (50) dans le corps de ventilateur (48) pour l'entrée de l'air de combustion dans le conduit d'alimentation (50),
dans lequel le silencieux d'aspiration d'air de combustion (76) est disposé essentiellement sur le deuxième côté axial (72) du corps de ventilateur (48).

9. Appareil de chauffage pour véhicule selon la revendication 8, **caractérisé en ce que** le silencieux d'aspiration d'air de combustion (76) comprend un premier chemin d'écoulement de silencieux (92) guidant l'air de combustion depuis une zone d'entrée d'air de combustion (62) du ventilateur d'air de combustion (46) essentiellement dans une deuxième direction axiale (R2) opposée à la première direction axiale (R1) en s'éloignant du deuxième côté axial (72) du corps de ventilateur (48) et un deuxième chemin d'écoulement de silencieux (94) guidant l'air de combustion essentiellement dans la première direction axiale (R1) vers la zone d'entrée du conduit d'alimentation (90), de préférence dans lequel le premier chemin d'écoulement de silencieux (92) et le deuxième chemin d'écoulement de silencieux (94) s'étendent essentiellement parallèlement à l'axe de rotation (D) ou/et le premier chemin d'écoulement de silencieux (92) est disposé radialement à l'extérieur du deuxième chemin d'écoulement de silencieux (94).

10. Appareil de chauffage pour véhicule selon la revendication 8 ou 9, **caractérisé en ce que** la zone d'entrée d'air de combustion (62) comprend un tuyau d'entrée d'air de combustion (64) réalisé de préférence d'un seul tenant avec le corps de ventilateur (48) avec un axe longitudinal de tuyau (S) s'étendant essentiellement à angle droit par rapport à l'axe de rotation (D), dans lequel une première ouverture de passage d'air de combustion (86) adjacente au tuyau d'entrée d'air de combustion (64), de préférence avec un premier axe d'ouverture (O1) orienté essentiellement parallèlement à l'axe de rotation (D), et une deuxième ouverture de passage d'air de combustion (88) ouverte vers la zone d'entrée du conduit d'alimentation (90), de préférence avec un deuxième axe d'ouverture (02) orienté essentiellement parallèlement à l'axe de rotation (D), sont prévues dans le corps de ventilateur (48).

11. Appareil de chauffage pour véhicule selon la revendication 10, **caractérisé en ce que** la première ouverture de passage d'air de combustion (86) et la deuxième ouverture de passage d'air de combustion (88) sont formées dans une fixation d'ouverture de passage (84), qui s'étend essentiellement dans la deuxième direction axiale (R2) sur le deuxième côté axial (72) du corps de ventilateur (48) et est de préférence réalisée d'un seul tenant avec le corps de ventilateur (48).

12. Appareil de chauffage pour véhicule selon la revendication 10 ou 11, **caractérisé en ce que** la première ouverture de passage d'air de combustion (86) est disposée radialement à l'extérieur de la deuxième ouverture de passage d'air de combustion (88).

13. Appareil de chauffage pour véhicule selon l'une des revendications précédentes, **caractérisé en ce qu'**un matériau de silencieux est disposé dans le boîtier de silencieux (78).

14. Appareil de chauffage pour véhicule selon la revendication 9 et la revendication 13, **caractérisé en ce que** le premier chemin d'écoulement de silencieux (92) et le deuxième chemin d'écoulement de silencieux (94) sont formés essentiellement dans le boîtier de silencieux (78).

15. Appareil de chauffage pour véhicule selon la revendication 13 et la revendication 14, **caractérisé en ce qu'**un corps de silencieux (98) en matériau de silencieux est disposé dans le boîtier de silencieux (78), le premier chemin d'écoulement de silencieux (92) et le deuxième chemin d'écoulement de silencieux (94) étant formés dans le corps de silencieux (98).

16. Appareil de chauffage pour véhicule selon l'une des revendications 8 à 15, **caractérisé en ce qu'**une roue de distribution d'air de chauffage (58) couplée à l'arbre de moteur (54) pour une rotation conjointe autour de l'axe de rotation (D) est prévue dans la zone d'entrée d'air de chauffage (18).
